# EUROPÄISCHE PATENTSCHRIFT

(11) **EP 1 880 183 B1**
(45) Veröffentlichungstag und Bekanntmachung des Hinweises auf die Patenterteilung: **12.04.2017**
(21) Anmeldenummer: 06743393.8
(22) Anmeldetag: 02.05.2006
(51) Int. Cl.: G01M 3/20

(54) **SCHNÜFFELLECKSUCHGERÄT**
SNIFFER LEAK DETECTOR
APPAREIL RENIFLEUR DE RECHERCHE DE FUITES

(30) Priorität: 13.05.2005 DE 102005022157
(43) Veröffentlichungstag der Anmeldung: 23.01.2008
(73) Patentinhaber: Inficon GmbH, 50968 Köln (DE)
(72) Erfinder: ROLFF, Randolf, 50169 Kerpen-Horrem (DE); MOSER, Norbert, 50354 Hürth (DE); SEITZ, Sandra, 40223 Düsseldorf (DE)
(74) Vertreter: dompatent von Kreisler Selting Werner - Partnerschaft von Patent- und Rechtsanwälten mbB
(86) Internationale Anmeldenummer: PCT/EP2006/061971
(87) Internationale Veröffentlichungsnummer: WO 2006/120130

(56) Entgegenhaltungen:
- JP-A- 2001 228 045
- US-A- 3 645 127
- US-A1- 2003 079 519
- US-A1- 2004 194 533

## Beschreibung

Die Erfindung betrifft ein Schnüffellecksuchgerät mit
einer von einem Bediener betätigbaren Schnüffelsonde,
einer mit der Schnüffelsonde verbundenen Saugvorrichtung, und
einem mit der Saugvorrichtung verbundenen Gasdetektor zur Erkennung eines Testgases.

Gegenstände und Anlagen, die Gasleitungen enthalten, benötigen häufig eine Dichtheitsprüfung. Bekannt sind Schnüffellecksuchgeräte, die eine handgeführte Schnüffelsonde aufweisen, welche mit einer Saugvorrichtung und einem Gasdetektor verbunden ist. Das Testobjekt wird mit einem Testgas gefüllt und aus einem Leck austretendes Testgas wird von der Schnüffelsonde angesaugt und vom Gasdetektor erkannt. Die Schnüffelsonde wird an dem Testobjekt in der Nähe verschiedener leckkritischer Punkte entlanggeführt und dort jeweils für eine geeignete Messzeit ruhig gehalten. Die Qualität bzw. Dichtigkeit des einzelnen Testobjekts lässt sich aus der Leckrate desjenigen Messpunkts mit der höchsten Leckrate und/oder aus der Summe der Leckraten der Messpunkte bestimmen. Üblicherweise hält die Bedienungsperson die Schnüffelsonde manuell an jedem einzelnen Messpunkt, wobei sichergestellt sein muss, dass die Messsonde möglichst ruhig gehalten wird und die Messzeit wird jeweils nur geschätzt. Als Gut-/Schlecht-Aussage wird üblicherweise ein Triggerwert benutzt, bei dessen Überschreitung an einem Messpunkt eine Fehlermeldung ausgelöst wird. Bei diesem Vorgehen werden schnell aus Versehen oder Nachlässigkeit einzelne Messpunkte vergessen, zu kurz vermessen oder die Schnüffelsonde wird während des Messvorganges bewegt. Dadurch können Lecks übersehen werden. Andererseits kann eine zu vorsichtige Bedienungsperson unnötig lange an einem Messpunkt verweilen und so zu langsam prüfen. Zudem lässt sich eine Überwachung der Summe aller Leckraten der Messpunkte auf diese Weise nicht durchführen.

JP 2001/228045 A beschreibt eine Gasleckdetektionsvorrichtung mit einer Schnüffelsonde, die an ein zu testendes Objekt klemmbar ist. Durch Festklemmen an dem Objekt wird ein Schalter betätigt, wodurch das Zählen einer vorgegebenen Zeit durch einen Zeitgeber und das Leuchten einer LED ausgelöst werden.

Der Erfindung liegt die Aufgabe zugrunde, ein Schnüffellecksuchgerät zu schaffen, dass die Erlangung verwertbarer Messergebnisse erleichtert.

Das Schnüffellecksuchgerät nach der vorliegenden Erfindung ist durch den Patentanspruch 1 bezeichnet. Es weist einen vom Bediener aktivierbaren Schalter auf, dessen Aktivierung den Beginn eines Messvorgangs einleitet und der eine Zeitmessung startet, wobei nach Ablauf einer vorgegebenen Messzeit ein Alarmsignal erzeugt wird.

Das Schnüffellecksuchgerät führt die Bedienungsperson durch Angabe des Endes eines Messvorganges von einem zum nächsten Messvorgang. Der vom Bediener aktivierbare Schalter, bei dem es sich um einen Taster an der Schnüffelsonde oder um einen Fußtaster handeln kann, gibt den Beginn eines Messvorgangs an. Die Beendigung der Messzeit wird mit dem Alarmsignal automatisch signalisiert. Auf diese Weise erhält der Bediener eine klare Angabe über das Ende der Messdauer, so dass sichergestellt ist, dass nicht zu kurz und auch nicht zu lange an einem Messpunkt gemessen wird.

Der Schalter ist mit einem Mikrocomputer verbunden, der einen Alarmgeber zur Erzeugung des Alarmsignals steuert. Der Mikrocomputer kann zur Auswertung des Messergebnisses mit dem Gasdetektor verbunden sein. Auf diese Weise wird sogleich nach Beendigung eines Messvorgangs das Messergebnis des betreffenden Messpunkts angezeigt.

Der Mikrocomputer, der das Messsignal auswertet, kann auch die Anzahl der Messvorgänge zählen und auf einem Display eine Anzeige mit Informationen über den nächstfolgenden Messvorgang oder das Ende einer Messreihe erzeugen. So kann beispielsweise die Anzeige eine Aufforderung enthalten, die Schnüffelsonde zum nächsten Messpunkt zu führen. Nach Ablauf der Messzeit am letzten Messpunkt einer vorgesehenen Messreihe kann das Ende der Messreihe angezeigt werden. Der Mikrocomputer kann auch eine Gut-/Schlecht-Anzeige über die Messreihe erzeugen. Der Benutzer erhält dann eine Information darüber, ob das Produkt insgesamt den Dichtigkeitsanforderungen genügt.

Der Mikrocomputer nimmt die Steuerung derart vor, dass er eine Betätigung des Schalters während eines laufenden Messvorganges ignoriert oder als Fehler meldet. Im Rahmen einer Fehlermeldung kann auch eine Anzeige erfolgen, die den Bediener darauf hinweist, dass der Messvorgang noch läuft und dass er die Schnüffelsonde weiterhin ruhig halten möge.

Bei einer bevorzugten Ausgestaltung der Erfindung weist die Schnüffelsonde einen Bewegungssensor auf, der mit dem Mikrocomputer verbunden ist, welcher im Falle eines einen Schwellenwert übersteigenden Bewegungssignals einen Fehler des Messsignals anzeigt. Als Bewegungssensor kann auch ein Beschleunigungssensor benutzt werden. Das Signal des Bewegungssensors kann auch dazu dienen, einen entsprechenden Messvorgang, bei dem die Schnüffelsonde nicht ruhig gehalten wurde, als ungültig zu erklären.

Der Mikrocomputer kann für unterschiedliche Testobjekte unterschiedliche Ablaufprogramme enthalten, die jeweils eine Messzeit, eine Grenzleckrate und eine Anzahl von Messpunkten angeben. Auf diese Weise ist für jedes Testobjekt eine Bedienerführung möglich, bei der durch entsprechende Anzeige am Display des Mikrocomputers die jeweils nächsten Schritte angezeigt werden. Auch die Auswertung der gewonnenen Messergebnisse erfolgt automatisch oder teilautomatisch, so dass der Bediener entlastet und der Prüfvorgang beschleunigt wird.

Eine bevorzugte Ausgestaltung der Erfindung sieht vor, dass der Mikrocomputer über eine laufende Messzeit hinweg ein Hinweissignal erzeugt. Dieses Hinweissignal kann als Dauerton oder intermittierender Ton erzeugt werden und gibt dem Benutzer an, dass die Schnüffelsonde immer noch ruhig gehalten werden muss, weil man sich in einem laufenden Messvorgang befindet.

An einem Display können sämtliche Schritte einer an einem Testobjekt vorzunehmenden Messreihe angezeigt werden, wobei jeweils der laufende Messvorgang hervorgehoben wird. Der Bediener erkennt dadurch schnell, an welcher Stelle der Messreihe er sich befindet.

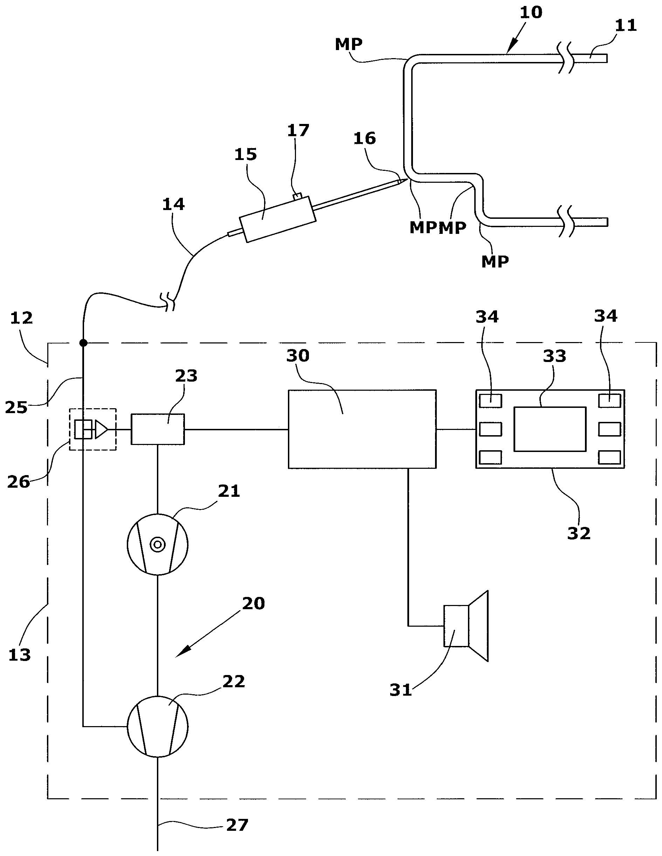

Im Folgenden wird unter Bezugnahme auf die einzige Figur der Zeichnung ein Ausführungsbeispiel der Erfindung näher erläutert:
Die Zeichnung zeigt ein Blockschaltbild des erfindungsgemäßen Schnüffellecksuchgeräts.

In der Zeichnung ist das Testobjekt 10 dargestellt, bei dem es sich in der Regel um ein Rohrleitungssystem 11 handelt oder um einen Behälter. Zu den Testobjekten, die mit dem Schnüffellecksuchgerät getestet werden, gehören unter anderem Kühlschränke, Kühlaggregate, Klimaanlagen und Gasbehälter. Das Testobjekt ist mit einem Testgas gefüllt, das detektierbar ist, wobei als Testgas insbesondere Helium oder das einzuschließende Gas, beispielsweise ein Kältemittel, geeignet ist. Das Testobjekt 10 hat potentielle Leckstellen, aus denen Testgas austreten könnte. Zur Ermittlung der Leckstellen sind Messpunkte MP definiert, an denen die Schnüffellecksonde jeweils für eine gewisse Zeit positioniert wird, um austretendes Testgas zu ermitteln.

Das Lecksuchgerät 12 weist ein Grundgerät 13 auf, das über eine flexible Schlauchleitung 14 mit einer Schnüffelsonde 15 verbunden ist. Die Schnüffelsonde 15 ist ein handgehaltenes Gerät, das pistolenartig ausgebildet sein kann und eine Schnüffelspitze 16 zum Einsaugen von Gas aufweist. Ferner ist an der Schnüffelsonde 15 ein Schalter 17 vorgesehen, der vom Bediener, der die Schnüffelsonde in der Hand hält, mit derselben Hand bedient werden kann. Wenn der Schalter 17 betätigt wird, wird ein neuer Messvorgang begonnen, wenn nicht ein Messvorgang bereits läuft.

Das Grundgerät 13, das als Standgerät oder tragbares Gerät ausgebildet ist, enthält eine Saugvorrichtung 20 aus einer Hochvakuumpumpe 21, insbesondere Turbomolekularpumpe, und einer Vorvakuumpumpe 22. Die beiden Pumpen sind hintereinander an einen Gasdetektor 23 angeschlossen, bei dem es sich hier um ein Massenspektrometer handelt. Alternativ können auch andere Gasdetektoren, die auf ein Testgas ansprechen, benutzt werden, beispielsweise ein Infrarot-Gasanalysator. Eine mit der Schlauchleitung 14 verbundene Leitung 25 führt über einen Flussteiler 26 einerseits zu dem Gasdetektor 23 und andererseits zu einem Saugeinlass, der Vorvakuumpumpe 22. Die Saugvorrichtung 20 erzeugt das Vakuum, welches für einen ordnungsgemäßen Betrieb des Gasdetektors 23 erforderlich ist und außerdem die Saugkraft für den Betrieb der Schnüffelsonde 15. Der Auslass 27 der Vorvakuumpumpe 22 führt ins Freie.

Das Massenspektrometer liefert ein Messsignal an einen Mikrocomputer 30, der einen Signalgeber 31 und ein Display 32 steuert. Der Signalgeber 31 ist ein akustischer Signalgeber. Alternativ können auch optische oder vibrierende Vorrichtungen verwendet werden. Das Display 32 enthält einen Bildschirm 33 und verschiedene Bedien- und Eingabetasten.

Die Schnüffelsonde 15 saugt von einem Messpunkt MP an dem Testgas austreten könnte, Gas ab. Bei diesem Gas handelt es sich um Luft, die ggf. mit Testgas vermischt ist. Das Lecksuchgerät prüft das Gasgemisch auf das Vorliegen von Testgas.

Mit Hilfe des Mikrocomputers 30, einem in diesem ablaufenden Programm, dem Schalter 17 und dem Signalgeber 31 wird eine Bedienerführung mit folgenden Schritten durchgeführt:
1. Der Bediener führt die Schnüffelspitze 16 zum nächsten Messpunkt MP des Testobjekts 10 und bestätigt mit dem Schalter 17 die stabile Ruhelage der Schnüffelspitze am richtigen Messpunkt.
2. Durch Betätigung des Schalters 17 wird der Beginn eines Messvorganges eingeleitet. Der Mikrocomputer 30 startet eine Zeitmessung, wobei nach Ablauf einer vorgegebenen Messzeit über den Signalgeber 31 ein Alarmsignal erzeugt wird.
3. Der Mikrocomputer 30 wertet das Messsignal des Gasdetektors 23 aus, erhöht die Nummer des Messpunkts MP um "1" und meldet über den Signalgeber 31 und/oder über das Display 32 dem Bediener die Aufforderung, die Schnüffelspitze 16 zum nächsten Messpunkt MP zu führen. Ist der letzte Messpunkt erreicht, wird das Ende der Messreihe gemeldet.
4. Bei Erreichen des Endes der Messreihe meldet der Mikrocomputer über den Signalgeber 31 und/oder das Display 32 der Bedienungsperson eine Gut-/Schlecht-Aussage bezüglich der gemessenen Leckraten.
5. Anschließend wird die nächste Messreihe automatisch oder nach Quittierung des Bedieners mittels des Schalters 17 gestartet.

Folgende Ausgestaltungen des Schnüffellecksuchgerätes sind möglich:
Der Mikrocomputer 30 kann die Zeit, die die Prüfperson im Schritt 1 verwendet, um die Schnüffelspitze vom einen Messpunkt zum nächsten zu führen, überwachen. Eine frühere (früher als eine einstellbare Mindestzeit) Betätigung des Schalters 17 wird dann entweder nicht akzeptiert oder als Fehler gemeldet. So vermeidet man ein zu hektisches und ungenaues Arbeiten der Prüfperson.

Während der Messzeit im Schritt 2 kann mittels eines Bewegungssensors innerhalb der Schnüffelsonde 15 überprüft werden, ob der Bediener die Spitze ruhig genug hält. Bei einer zu großen Unruhe kann der Mikrocomputer einen Fehler melden und zur Wiederholung des Messvorganges auffordern.

Für verschiedene Testobjekte 10 können mehrere Programme im Mikrocomputer 30 abgespeichert werden, wobei jeweils das für die zu messende Anlage geeignete Programm aktiviert werden kann. Die Programme enthalten beispielsweise, jedoch nicht abschließend, Messzeit, Mindestzeit, Grenzleckrate, Zahl der Messpunkte. Der Bediener hat bei jedem Testobjekt jeweils eine passende Bedienerführung.

Zur Verdeutlichung der Messzeit für den Bediener kann der Mikrocomputer über den Signalgeber 31 während der Messzeit ein Dauersignal bzw. intermittierendes Dauersignal ausgeben, um den Bediener darauf hinzuweisen, die handgehaltene Schnüffelsonde weiterhin ruhig zu halten. Es ist ferner sinnvoll, die Bedienerführung auf einem Display an der Schnüffelsonde darzustellen. So braucht der Bediener seine Aufmerksamkeit hauptsächlich nur der Schnüffelsonde zuzuwenden.

## Patentansprüche

1. Schnüffellecksuchgerät mit
- einer von einem Bediener betätigbaren Schnüffelsonde (15),
- einer mit der Schnüffelsonde verbundenen Saugvorrichtung (20),
- einem mit der Saugvorrichtung (20) verbundenen Gasdetektor (23) zur Erkennung eines Testgases,
wobei ein Mikrocomputer (30) vorgesehen ist, der mit einem vom Bediener aktivierbaren Schalter (17) verbunden ist, dessen Aktivierung den Beginn einer Messzeit einleitet und eine Zeitmessung startet, wobei der Mikrocomputer (30) so eingerichtet ist, dass er nach Ablauf einer vorgegebenen Messzeit einen Signalgeber (31) zur Erzeugung eines Alarmsignals steuert, **dadurch gekennzeichnet,**
**dass** der Mikrocomputer (30) so eingerichtet ist, dass er die Zeit zwischen den Anfängen zweier Messzeiten überwacht und einen durch Betätigung des Schalters (17) verursachten zu frühen Beginn der zweiten Messzeit nicht akzeptiert oder als Fehler meldet.

2. Schnüffellecksuchgerät nach Anspruch 1, **dadurch gekennzeichnet, dass** der Mikrocomputer (30) zur Auswertung des Messergebnisses mit dem Gasdetektor (23) verbunden ist.

3. Schnüffellecksuchgerät nach Anspruch 1 oder 2, **dadurch gekennzeichnet, dass** der Mikrocomputer (30) so eingerichtet ist, dass er die Anzahl der Messvorgänge zählt und auf einem Display (32) eine Anzeige mit Informationen über den nächstfolgenden Messvorgang oder das Ende einer Messreihe erzeugt.

4. Schnüffellecksuchgerät nach einem der Ansprüche 1 bis 3, **dadurch gekennzeichnet, dass** der Mikrocomputer (30) so eingerichtet ist, dass er anhand der Messergebnisse eine Gut-/Schlecht-Anzeige über die Messreihe erzeugt.

5. Schnüffellecksuchgerät nach einem der Ansprüche 1 bis 4, **dadurch gekennzeichnet, dass** der Mikrocomputer (30) so eingerichtet ist, dass er eine Betätigung des Schalters (17) während eines laufenden Messvorganges ignoriert oder als Fehler meldet.

6. Schnüffellecksuchgerät nach einem der Ansprüche 1 bis 5, **dadurch gekennzeichnet, dass** die Schnüffelsonde (15) einen Bewegungssensor aufweist, der mit dem Mikrocomputer (30) verbunden ist, welcher so eingerichtet ist, dass im Falle eines einen Schwellenwert übersteigenden Bewegungssignals einen Fehler des Messsignals anzeigt.

7. Schnüffellecksuchgerät nach einem der Ansprüche 2 bis 6, **dadurch gekennzeichnet, dass** der Mikrocomputer (30) für unterschiedliche Testobjekte (10) unterschiedliche Ablaufprogramme enthält, die jeweils eine Messzeit, eine Grenzleckrate und eine Anzahl von Messpunkten angeben.

8. Schnüffellecksuchgerät nach einem der Ansprüche 2 bis 7, **dadurch gekennzeichnet, dass** der Mikrocomputer (30) so eingerichtet ist, dass er über eine laufende Messzeit hinweg ein Hinweissignal erzeugt.

9. Schnüffellecksuchgerät nach einem der Ansprüche 1 bis 8, **dadurch gekennzeichnet, dass** der Schnüffellecksuchgerät ein Display aufweist, auf dem sämtliche Schritte einer an einem Testobjekt (10) vorzunehmenden Messreihe anzeigbar sind, wobei jeweils der laufende Messvorgang hervorgehoben werden.

## Claims

1. A sniffing leak detector comprising
- an operator-actuated sniffing probe (15),
- a suction device (20) connected with said sniffing probe,
- a gas detector (23) connected with said suction device (20) for detecting a test gas,
wherein a microcomputer (30) is provided which is connected to an operator-activated switch (17) that, when being activated, initiates the beginning of a measuring period and starts a time measurement, said microcomputer (30) being designed for controlling a signal transmitter (31) to generate an alarm signal upon expiration of a predetermined measuring period,
**characterized in that**
said microcomputer (30) is designed to monitor the period between the beginnings of two measuring periods, and to not accept, or to indicate as an error, a premature beginning of the second measuring period initiated by actuation of the switch (17).

2. The sniffing leak detector according to claim 1, **characterized in that** the microcomputer (30) is connected with the gas detector (23) for evaluating the measuring result.

3. The sniffing leak detector according to claim 1 or 2, **characterized in that** the microcomputer (30) is designed to count the number of measuring operations, and to generate, on a display (32), an indication including information on the next measuring operation or the end of a measuring sequence.

4. The sniffing leak detector according to any one of claims 1 to 3, **characterized in that** the microcomputer (30) is designed to generate a good/bad message about the measuring sequence on the basis of the measuring results.

5. The sniffing leak detector according to any one of claims 1 to 4, **characterized in that** the microcomputer (30) is designed to ignore, or to indicate as an error, an actuation of the switch (17) during an ongoing measuring operation.

6. The sniffing leak detector according to any one of claims 1 to 5, **characterized in that** the sniffing probe (15) comprises a movement sensor connected with the microcomputer (30) which is designed to indicate a faulty measuring signal when a movement signal exceeds a threshold value.

7. The sniffing leak detector according to any one of claims 2 to 6, **characterized in that** the microcomputer (30) includes different sequence programs for different test items (10), said sequence programs each indicating a measuring time, a limit leak rate and a number of measuring points.

8. The sniffing leak detector according to any one of claims 2 to 7, **characterized in that** the microcomputer (30) is designed to generate an indication signal over an ongoing measuring period.

9. The sniffing leak detector according to any one of claims 1 to 8, **characterized in that** the sniffing leak detector comprises a display on which all steps of a measuring sequence to be performed on a test item (10) are displayed, wherein the respective ongoing measuring operation is highlighted.

## Revendications

1. Appareil renifleur de recherche de fuites comprenant
- une sonde renifleuse (15) apte à être actionnée par un opérateur,
- un dispositif d'aspiration (20) raccordé à la sonde renifleuse,
- un détecteur de gaz (23) raccordé au dispositif d'aspiration (20) pour reconnaître un gaz de test,
un micro-ordinateur (30) étant prévu qui est raccordé à un commutateur (17) susceptible d'être actionné par l'opérateur, l'actionnement faisant débuter une période de mesure et commencer un mesurage de temps, le micro-ordinateur (30) étant configuré de façon qu'il commande, après écoulement d'une période de mesure prédéterminée, un générateur de signaux (31) pour engendrer un signal d'alerte,
**caractérisé en ce que**
le micro-ordinateur (30) est configuré de façon qu'il surveille le temps entre les débuts de deux périodes de mesure et qu'il n'accepte pas un début prématuré de la deuxième période de mesure causé par un actionnement du commutateur (17), ou qu'il le signale comme erreur.

2. Appareil renifleur de recherche de fuites selon la revendication 1, **caractérisé en ce que** le micro-ordinateur (30) est raccordé au détecteur de gaz (23) pour une exploitation du résultat de mesure.

3. Appareil renifleur de recherche de fuites selon la revendication 1 ou 2, **caractérisé en ce que** le micro-ordinateur (30) est configuré de façon qu'il compte le nombre d'actions de mesurage et qu'il engendre sur un moyen d'affichage (32) une indication contenant une information sur l'action de mesurage suivante ou la fin d'une série de mesures.

4. Appareil renifleur de recherche de fuites selon l'une des revendications 1 à 3, **caractérisé en ce que** le micro-ordinateur (30) est configuré de façon qu'il engendre, sur la base des résultats de mesure, une indication bon/mauvais concernant la série de mesures.

5. Appareil renifleur de recherche de fuites selon l'une des revendications 1 à 4, **caractérisé en ce que** le micro-ordinateur (30) est configuré de façon qu'il ignore un actionnement du commutateur (17) au cours d'une action de mesurage, ou qu'il le signale comme erreur.

6. Appareil renifleur de recherche de fuites selon l'une des revendications 1 à 5, **caractérisé en ce que** la sonde renifleuse (15) comprend un capteur de mouvement qui est raccordé au micro-ordinateur (30) lequel est configuré de façon qu'il indique une erreur du signal de mesure lorsque le signal de mouvement dépasse une valeur seuil.

7. Appareil renifleur de recherche de fuites selon l'une des revendications 2 à 6, **caractérisé en ce que** le micro-ordinateur (30) comprend différents programmes de déroulement pour différents objets de test (10), qui comprennent une période de mesure, un débit de fuite limite et un nombre de points de mesure.

8. Appareil renifleur de recherche de fuites selon l'une des revendications 2 à 7, **caractérisé en ce que** le micro-ordinateur (30) est configuré de façon qu'il engendre un signal d'indication au-delà d'une période de mesure en cours.

9. Appareil renifleur de recherche de fuites selon l'une des revendications 1 à 8, **caractérisé en ce que** l'appareil renifleur de recherche de fuites comprend un dispositif d'affichage sur lequel toutes les étapes d'une série de mesures à effectuer sur un objet de test (10) peuvent être affichées, l'action de mesurage en cours respective pouvant être mise en évidence.
